# EUROPEAN PATENT APPLICATION

(11) **EP 2 506 181 A1**
(43) Date of publication of application: **03.10.2012**
(21) Application number: 11290149.1
(22) Date of filing: 28.03.2011
(51) Int. Cl.: G06F 21/00, G06Q 50/00

(54) **A method, a system, a device, a computer program and a computer program product for managing remote devices**

(71) Applicant: Alcatel Lucent, 75007 Paris (FR)
(72) Inventor: Weik, Hartmut, 70195 Stuttgart (DE)
(74) Representative: Wetzel, Emmanuelle

(57) **Abstract**

The invention concerns a controlling device (170), wherein said controlling device (170) comprises a meter (150) adapted to determine an actual resource consumption and a processing means (130) adapted to read a stored authentication key, to send a request for resource comprising an information about an identification of said remote device (140), and said authentication key to a server (160), and upon receipt of a response containing information about a granted amount of resource to determine from said actual resource consumption and said granted amount of resource a current resource consumption.

## Description

### Field of the invention

The invention relates to a method, a system, a device, a computer program and a computer program product for managing remote devices.

### Background

In an implementation capable of managing devices at remote sites, said devices are connected to a resource supply, e.g. an electrical supply or a water supply. To manage said devices, means for supplying the device and means to measure the consumption of the supplied resource per site are used. To determine individual usage of supplied resource, sometimes specific local meters are used. Some local meters are adapted to be accessed remotely, e.g. via internet, to determine individual usage. The resource usage is then separately billed to each local site for example in an annual or monthly bill. To charge up front, sometimes monthly advance payment is required wherein the actual usage of resources is determined afterwards and the offset to the advance payment is charged or refunded. Typically a specific public utility, e.g. the local waterworks or electrical energy provider, is contracted for a long period of time, e.g. at least one month, to handle the supply and payment.

However, this form of managing the devices is inconvenient and furthermore inhibits real competition in a flexible market.

### Summary

The object of the invention is thus to provide an automatic solution capable of managing the remote devices.

One part of the main idea of the invention is a controlling device for managing remote devices wherein said controlling device comprises a meter adapted to determine an actual resource consumption and a processing means adapted to read a stored authentication key, to send a request for resource comprising an information about an identification of said remote device, and said authentication key to a server, and upon receipt of a response containing information about a granted amount of resource to determine from said actual resource consumption and said granted amount of resource a current resource consumption.

A further part of the main idea is a system for managing a remote device, wherein a server is adapted to receive request for resource from a controlling device comprising an information about an identification of said remote device, and an authentication key, to authenticate said authentication key, to determine a granted amount of resource depending on said authentication key and to send a response containing information about a granted amount of resource, and said controlling device comprises a meter adapted to determine an actual resource consumption and a processing means adapted to read a stored authentication key, to send a request for resource comprising an information about an identification of said remote device, and said authentication key to said server, and upon receipt of a response containing information about said granted amount of resource to determine from said actual resource consumption and said granted amount of resource a current resource consumption.

This way a device that consumes resources like electrical energy, water, gas on a remote site, e.g. a home installation or household is managed separately depending on granted amounts. As a consequence complex, flexible and or new charging models can be developed and sold.

Advantageously said processing means is adapted to determine an operation mode depending on said granted amount of resource. This way said remote device is easily managed.

Advantageously said processing means is adapted to send information about said resource consumption to said server. This way a feedback loop between said remote device and said server is created for feedback control of said remote device.

Advantageously said processing means is adapted to determine said operation mode depending on a reading of said meter.

Advantageously said authentication key is read from a read only memory stored fix in said remote device. This way authentication is integrated into said remote device in a secure unchangeable way.

Advantageously said authentication key is stored fixed into a removable read only memory readably by said processing means of said remote device. This way multiple authentication key may be used in different machines, increasing flexibility. Also said removable read only memory is portable and may be purchased frequently for different granted amounts.

Further developments of the invention can be gathered from dependent claims and the following description.

### Brief description of the figures

In the following the invention will be explained further making reference to the attached drawings.
Fig. 1 schematically shows a first part of a system for managing a remote device.
Fig. 2 schematically shows a first flow chart.
Fig. 3 schematically shows a second flow chart.

### Description of the embodiments

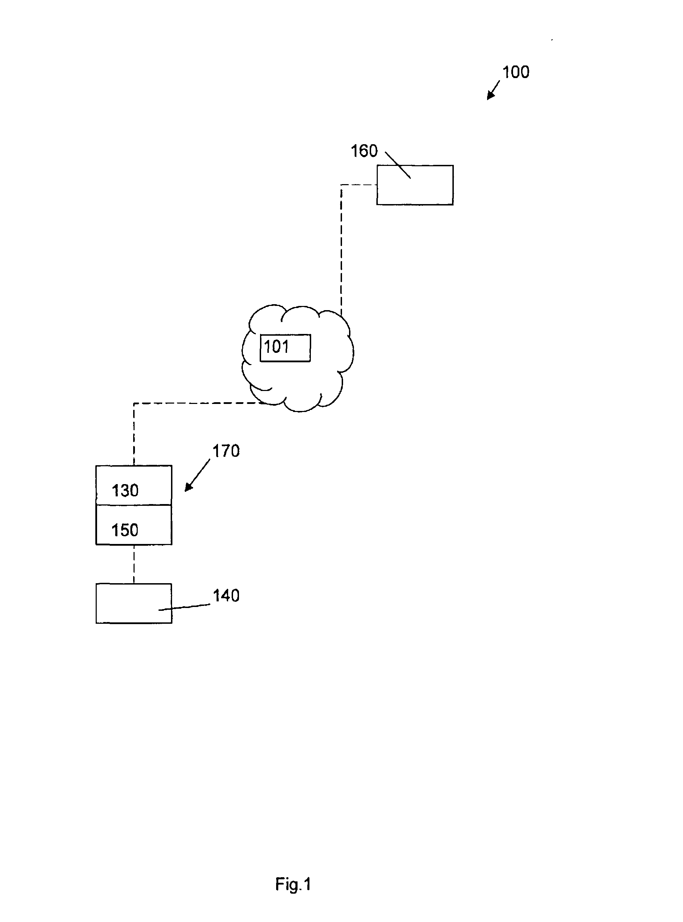

Fig. 1 schematically shows a first part of a system 100 for managing a remote device 140.

The invention is described for granting use of electrical energy to a washing machine as an example. Further application of the invention is to grant the consumption of e.g. water, but also the consumption of e.g. water, or heating or gas.

Figure 1 shows a server 160 and a controlling device 170 connected via a data link, e.g. a transmission control protocol internet protocol link (TCP/IP). This link may be direct or via multiple intermediate devices of which one network device 101 is shown exemplary in figure 1.

Sending and receiving of information is for example achieved using messages, e.g. according to the transmission control protocol internet protocol link (TCP/IP).

Said server 160 is adapted to receive a request for resource from said controlling device 170 comprising information about identification of said remote device 140 and an authentication key. Said identification is for example a unique device number stored in a local storage on said remote device 140.

Said server 160 is adapted to authenticate said authentication key. Said authentication key is for example a first key of a pair of symmetric or asymmetric keys. The second key of said pair is for example stored on said server 160 or may be transferred to said server 160 upon request from a trust center, i.e. another server dedicated to store authentication keys.

Said server 160 is adapted to determine a granted amount of resource depending said authentication key. Said granted amount may be looked up in a data base storing granted amounts assigned to said authentication key or may be calculated by said server 160 in real time, e.g. from information stored in a data base assigned to said authentication key. Instead of the authentication key, information about said identification of said remote device 140 may be used.

For example, an amount of electrical energy equivalent to 10 Euros is assigned to an authentication key. On the one hand said information is stored in said data base, on the other hand said authentication key is stored on a portable read only storage medium like a Subscriber Identity Module (SIM).

Alternatively said authentication key is stored fixed into a read only memory of said remote device 140.

Said server 160 is adapted to send a response containing information about said granted amount of resource to said controlling device 170.

Said controlling device 170 comprises a processing means 130 adapted to read a stored authentication key. For example said processing means 130 is adapted to read said portable read only storage medium like a Subscriber Identity Module (SIM).

Said controlling device 170 is adapted to send said request for resource comprising said information about said identification of said remote device 140, and said authentication key to said server 160.

Said remote device 140 is adapted receive said response containing information about a granted amount of resource from said server 160.

Said processing means 130 is adapted to start said remote device 140 upon receipt of said response, e.g. to turn on said washing machine.

Said controlling device 170 comprises a meter 150 adapted to determine actual resource consumption, e.g. said meter 150 is adapted to measure electrical energy consumption of said washing machine.

Said processing means 130 is adapted to determine an operation mode of said remote device 140 depending on said granted amount of resource. For example said operating mode is selected from a list stored on said remote device 140 mapping ranges of granted electricity amounts to the maximum spinning frequency or maximum water temperature of the washing machine in order to guarantee operation of said washing machine within the limits of the granted amount of electrical energy.

Said processing means 130 may be adapted to send information about said resource consumption to said server 160. For example the actual electrical energy consumption is determined from the difference between readings of said meter 150 at the beginning and at the end of the washing cycle. Said actual electrical energy consumption is then send to said server 160.

Said server 160 may be adapted to upon receipt of said information about said resource consumption, determine an updated value of said granted amount. For example said information about said resource consumption is an already used amount of electrical energy. For example said server 160 is adapted read the previously granted amount of electrical energy from said data base and subtract said already used amount of electrical energy to determine said updated value of said granted amount.

Multiple authentication keys may be assigned to the same granted amount in said data base.

Multiple identification of said remote devices 140 may be assigned to the same granted amount in said data base.

In this case any use of any of the authentication keys or identifications of remote devices 140 results in calculation of a new granted amount. This way groups of users sharing the same remote device may be charged either to the same granted amount via the identification of said remote device, or individual granted amounts of individual users may be charged, via said authentication keys in case said authentication keys are stored on removable storage.

Said updated amount may either be stored by said server 160 in said data base as said granted amount assigned to said authentication key, or may be sent by said server 160 to said controlling device 170.

Said processing means 130 may be adapted to determine said operation mode depending on a reading of said meter 150 or said updated amount received from said server 160 as well. For example said maximum spinning frequency or maximum water temperature of the washing machine is adjusted during the program from said list mapping in order to guarantee operation of said washing machine within the limits of the granted amount of electrical energy or the updated granted amount of electrical energy.

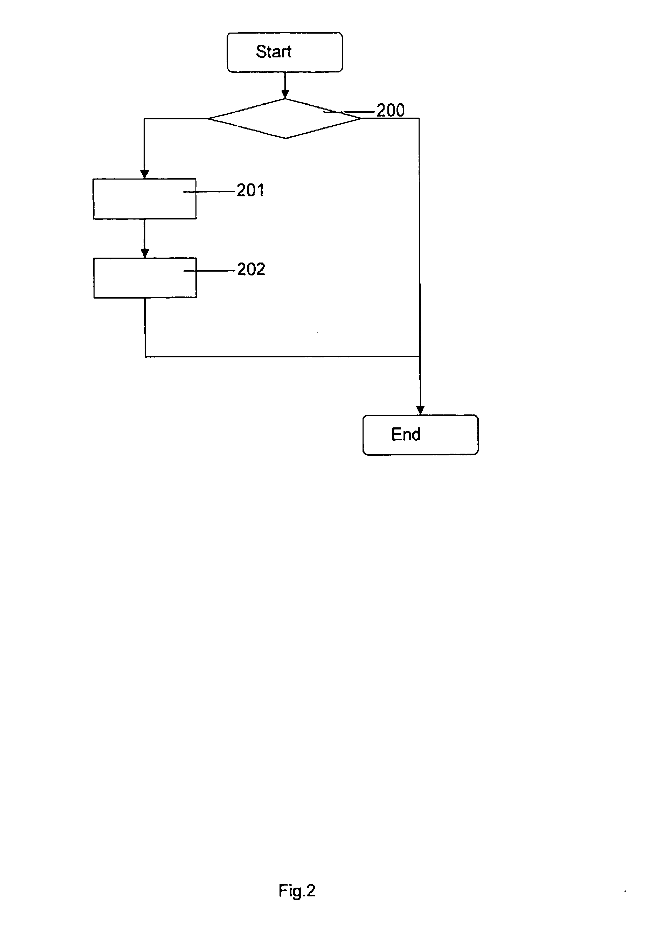

A method for managing said remote device 140 is described below making reference to figure 2.

Said method starts, for example whenever said request for resource from said controlling device 170 comprising said information about said identification of said remote device 140, and said authentication key is received by said server 160 from said controlling device 170.

After the start a step 200 is executed.

In said step 200, said server 160 authenticates said authentication key. Said authentication key is for example authenticated using said second key of said key pair stored on said server 160. The keys may be according to the well known pretty good privacy encryption.

If said authentication fails, said method ends, otherwise a step 201 is performed.

In said step 201 said server 160 determines a granted amount of resource depending on said authentication key. For example said granted amount assigned to said authentication key is looked up in said data base using said authentication key.

Afterwards a step 202 is performed.

In said step 202 said server 160 sends said response containing information about said granted amount of resource to said controlling device 170.

Afterwards said method ends.

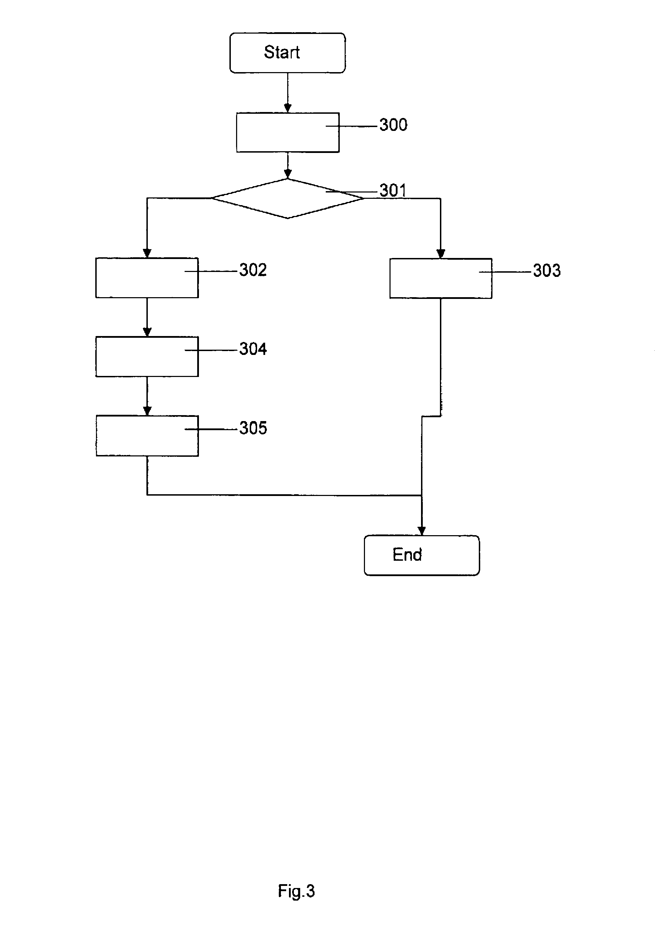

A further method executed on controlling device 170 is explained making reference to figure 3. Said further method starts whenever a start button is pressed on said remote device 140.

After the start a step 300 is performed.

In said step 300 said request for resource comprising said information about said identification of said remote device 140 and said authentication key is sent from said controlling device 170 to said server 160.

Afterwards a step 301 is executed.

In said step 301 a test is performed to detect, whether said response has been received from said server 160. In case said response is available, a step 302 is executed, otherwise a timeout condition is monitored. In case a timeout occurred, e.g. after waiting for 2 seconds, a step 303 is executed.

In said step 303 an error message, e.g. "no credit available" is displayed on a display of said controlling device 170 or said remote device 140 and afterwards said further method ends.

In said step 302 said remote device 140 is started. For example a washing program is started in said washing machine.

Afterwards a step 304 is executed.

In said step 304, said processing means 130 determines said granted amount from said information about said granted amount received from said server 160 and looks up said operation mode depending on said granted amount. Optionally said processing means 130 reads said meter 150 and uses said meter reading also to determine said operating mode. For example said operating mode is determined by at first subtracting said meter reading from said granted amount to determine a remaining amount of electrical energy and then looking up a maximum spinning frequency of 800 revolutions per minute in said data base that is available for said remaining amount of electrical energy. Afterwards a step 305 is executed.

In said step 305 said processing means 130 sets said remote device 140 to said operating mode. For example said operating mode is set to maximum spinning frequency of 800 revolutions per minute. Afterwards said method ends.

Optionally said steps 304 and 305 are repeated until a stop condition is met. Said stop condition may be end of a program, e.g. a washing program. During said step 304 in this case updated granted amounts or meter readings are used to determine said operating mode.

A computer program contained on a computer program product may be implemented according to the aforementioned method and executed on a computer to manage said remote device 140.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A controlling device (170), wherein said controlling device (170) comprises a meter (150) adapted to determine an actual resource consumption and a processing means (130) adapted to read (300) a stored authentication key, to send (300) a request for resource comprising an information about an identification of said remote device (140), and said authentication key to a server (160), and upon receipt (301) of a response containing information about a granted amount of resource to determine (304) from said actual resource consumption and said granted amount of resource a current resource consumption.

2. The controlling device (170) of claim 2, wherein said processing means (130) is adapted to determine (304) an operation mode depending on said granted amount of resource.

3. The controlling device (170) of claim 2 or 3, wherein said processing means (130) is adapted to send information about said resource consumption to said server (160).

4. The controlling device (170) of claim 3, wherein said processing means (130) is adapted to determine (304) said operation mode depending on a reading of said meter (150).

5. The controlling device (170) of claim 2 to 4, wherein said authentication key is read (300) from a read only memory stored fix in said remote device (140).

6. The controlling device (170) of claim 2 to 4, wherein said authentication key is stored fixed into a removable read only memory readably by said processing means (130).

7. A server (160) for managing a remote device (140), **wherein** said server (160) is adapted to receive a request for resource from a controlling device (170) comprising an information about an identification of said remote device (140), and an authentication key, to authenticate (200) said authentication key, to determine (201) a granted amount of resource depending said authentication key and to send (202) a response containing information about a granted amount of resource.

8. A system for managing a remote device (140), **wherein** a server (160) is adapted to receive request for resource from a controlling device (170) comprising an information about an identification of said remote device (140), and an authentication key, to authenticate (200) said authentication key, to determine (201) a granted amount of resource depending on said authentication key and to send (202) a response containing information about a granted amount of resource, and said controlling device (170) comprises a meter (150) adapted to determine an actual resource consumption and a processing means (130) adapted to read (300) a stored authentication key, to send (300) a request for resource comprising an information about an identification of said remote device (140), and said authentication key to said server (160), and upon receipt (301) of a response containing information about said granted amount of resource to determine (304) from said actual resource consumption and said granted amount of resource a current resource consumption.

9. A method for managing a remote device (140), **wherein** a server (160) receives a request for resource from a controlling device (170) comprising an information about an identification of said remote device (140), and an authentication key, said server (160) authenticates (200) said authentication key, determines (201) a granted amount of resource depending on said authentication key and sends (202) a response containing information about a granted amount of resource to said remote device (140).

10. The method according to claim 9 wherein a meter (150) determines an actual resource consumption and a processing means (130) reads a stored authentication key, sends a request for resource comprising information about an identification of said remote device (140) and said authentication key to said server (160), and upon receipt of a response containing information about said granted amount of resource to determine from said actual resource consumption and said granted amount of resource a current resource consumption.

11. A method for managing a remote device (140), **wherein** a meter (150) determines an actual resource consumption, a processing means (130) reads (300) a stored authentication key, sends (300) a request for resource comprising an information about an identification of said remote device (140), and said authentication key to a server (160), and upon receipt (301) of a response containing information about a granted amount of resource determines (304) from said actual resource consumption and said granted amount of resource a current resource consumption.

12. A computer program for managing a remote device (140), **wherein** said computer program, when executed on a computer, causes the computer to receive a request for resource from a controlling device (170) comprising an information about an identification of said remote device (140), and an authentication key, to authenticate (200) said authentication key, determine (201) a granted amount of resource depending on said authentication key and send (202) a response containing information about a granted amount of resource to said controlling device (170).

13. A computer program product for managing a remote device (140), comprising a computer usable medium having a computer readable program, **wherein** said computer readable program, when executed on a computer, causes the computer to receive a request for resource from a controlling device (170) comprising an information about an identification of said remote device (140), and an authentication key, to authenticate (200) said authentication key, determine (201) a granted amount of resource depending on said authentication key and send (202) a response containing information about a granted amount of resource to said controlling device (170).
